Europäisches Patentamt

European Patent Office

Office européen des brevets

(19)

(11) Publication number: **0 509 102 A1**

## EUROPEAN PATENT APPLICATION
### published in accordance with Art. 158(3) EPC

(12)

(21) Application number: **91915708.1**

(22) Date of filing: **30.08.91**

(86) International application number: **PCT/JP91/01160**

(87) International publication number: **WO 92/04664 (19.03.92 92/07)**

(51) Int. Cl.⁵: **G05B 19/405**, B23Q 15/00, B23Q 17/00

(30) Priority: **05.09.90 JP 234733/90**

(43) Date of publication of application: **21.10.92 Bulletin 92/43**

(84) Designated Contracting States: **CH DE IT LI**

(71) Applicant: **FANUC LTD.**
**3580, Shibokusa Aza-Komanba, Oshino-mura Minamitsuru-gun, Yamanashi 401-05(JP)**

(72) Inventor: **FUJITA, Naoki, Room 6-203, Fanuc Manshonharimomi**
**35 37-1, Shibokusa, Oshino-mura Minamitsuru-gun, Yamanashi 401-05(JP)**
Inventor: **MATSUMURA, Teruyuki, Fanuc Dai-3 Vira-karamatsu**
**352 7-1, Shibokusa, Oshino-mura Minamitsuru-gun, Yamanashi 401-05(JP)**
Inventor: **NAGASHIMA, Noritake, R.8-303, Fanuc Manshonharimom**
**3511-1, Shibokusa, Oshino-mura Minamitsuru-gun, Yamanashi 401-05(JP)**

(74) Representative: **Billington, Lawrence Emlyn et al**
**Haseltine Lake & Co Hazlitt House 28, Southampton Buildings Chancery Lane London WC2A 1AT(GB)**

(54) **METHOD OF WORKING SIMULATION.**

(57) A method of simulation of turning center working requiring the movement of a tool with respect to a Y-axis perpendicularly intersecting both a Z-axis in parallel to a rotary shaft of a work and an X-axis perpendicularly intersecting the Z-axis, wherein, when a working program requiring the tool movement with respect to the Y-axis, e.g. a groove working program is selected as an object of simulation, a processor of an interactive numerical control device sets an XZ drawing region and an XY drawing region which are relating to a side surface and an end surface of the work, respectively, on a display screen (16c), subsequently, executing the working program, and dynamically, graphically displays the process of movement of the tool (56) relative to the work (54) on the XZ and XY drawing regions, respectively.

EP 0 509 102 A1

FIG.4

Technical Field

This invention relates to a method of simulating a machining operation by graphic animation, and more particularly, to a method of simulating a turning center operation which involves a tool movement relative to an axis perpendicular to both an axis parallel to a rotary axis of a workpiece and an axis perpendicular to the axis thereof.

Background Art

Typically, a turning center has a Z-axis parallel to the rotary axis of a workpiece, an X-axis perpendicular to the Z-axis, and a Y-axis perpendicular to both the X-and Z-axes, and a tool is moved along one or more axes to carry out turning, groove cutting, drilling, etc. For example, a tool abutted against a workpiece rotating about the Z-axis is moved in the X-axis direction to carry out turning. For groove cutting, the rotating tool is moved along the X-and-Y axes relative to a workpiece which is supported in a nonrotatable manner.

It is known to simulate a machining operation at the turning center as described above by graphic animation to thereby check the correctness of a machining program. In conventional methods, however, a turning center operation which involves a tool movement relative to the Y-axis cannot be simulated satisfactorily; for example, the tool movement relative to the Y-axis for groove cutting or drilling cannot be displayed graphically. Thus, with the conventional methods, the correctness of a machining program for a turning center operation involving a tool movement relative to the Y-axis cannot be checked by simulating the machining operation.

Disclosure of the Invention

An object of this invention is to provide a method of simulating a machining operation which permits a simulation of a turning center operation involving a tool movement relative to the axis perpendicular to both an axis parallel to a rotary axis of a workpiece and an axis perpendicular to the axis thereof by graphic animation, to thereby facilitate the checking of the correctness of a machining program for such a turning center operation.

To achieve the above object, this invention provides a method of simulating a machining operation by graphic animation which is applied to a turning center having a first axis parallel to a rotary axis of a workpiece, a second axis perpendicular to the first axis, and a third axis perpendicular to both the first and second axes. This method comprises the steps of:

(a) setting a predetermined drawing area relating to the third axis on a drawing screen when a machining program for a turning center operation involving a tool movement relative to the third axis of the turning center is selected as a subject to be simulated; and

(b) simulating the turning center operation involving the tool movement relative to the third axis on the drawing screen and simultaneously simulating the tool movement relative to the third axis in the predetermined drawing area, while executing the machining program.

As described above, according to this invention, when a machining program for a turning center operation involving a tool movement relative to the third axis perpendicular to both the first axis parallel to the rotary axis of the workpiece and the second axis perpendicular to the first axis is executed for simulating the turning center operation on the drawing screen, the tool movement relative to the third axis is simulated in the predetermined drawing area set within the drawing screen. Accordingly, the correctness of a machining program for a turning center operation involving a tool movement relative to the third axis, e.g., a groove cutting or drilling at the turning center, can be checked easily.

Brief Description of the Drawings

FIG. 1 is a schematic block diagram showing an interactive numerical control device for carrying out a method of simulating a machining operation according to one embodiment of this invention, along with a turning center and a programmable machine controller;

FIG. 2 is a diagram showing a machining program for a groove cutting displayed on a display screen in FIG. 1;

FIG. 3 is a diagram showing a machining program for drilling;

FIG. 4 is a view of a graphic display shown during a machining simulation in accordance with the groove cutting program;

FIG. 5 is a view of a graphic display showing a path of movement of a groove cutting tool in accordance with the groove cutting program;

FIG. 6 is a view of a graphic display shown during a machining simulation in accordance with the drilling program; and

FIG. 7 is a view of a graphic display showing a path of movement of a drilling tool in accordance with the drilling program.

Best Mode of Carrying Out the Invention

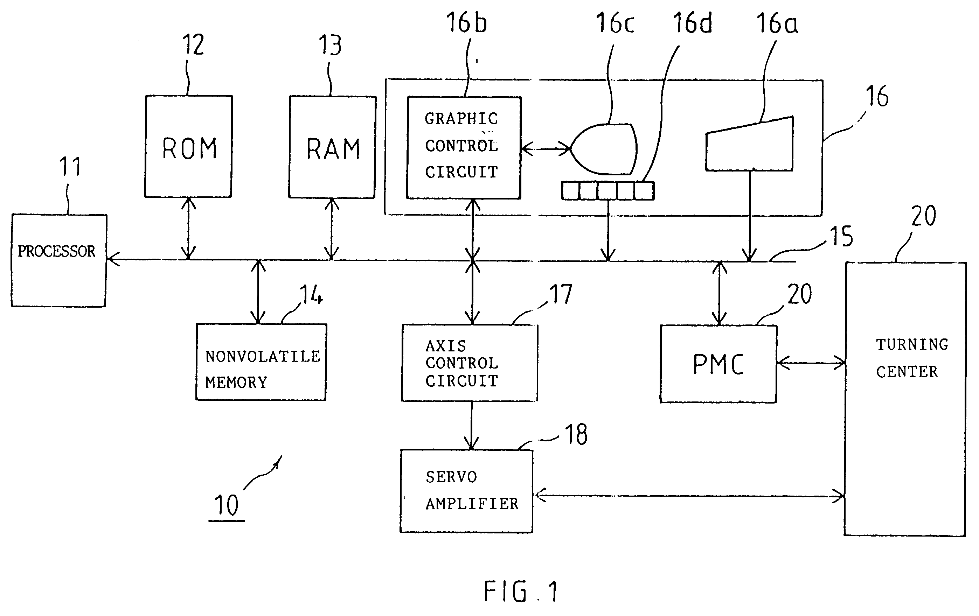

A method of simulating a machining operation according to an embodiment of this invention is carried out, for example, by an interactive numerical control device 10 shown in FIG. 1. The numerical control device 10 has an automatic programming function for automatically creating various NC machining programs including a machining program for a turning center 20 in an interactive manner with an operator, and a simulating function for the checking the correctness of an automatically prepared machining program, in addition to the function of controlling the operation of the turning center 20 directly or through a programmable machine controller (PMC) 30.

The turning center 20 has servomotors (not shown) associated respectively with a first axis (Z-axis) parallel to a rotary axis of a workpiece, a second axis (X-axis) perpendicular to the first axis, and a third axis (Y-axis) perpendicular to both the first and second axes. When one or more servomotors are driven under the control of the numerical control device, a tool is moved along one or more axes to perform, groove cutting, drilling, or the like.

Referring to FIG. 1, the numerical control device 10 comprises a processor 11, a read-only memory 12 formed of, for example, an EPROM or EEPROM storing a system program for globally controlling the numerical control device, a program for automatic programming, and other data, a random-access memory 13 formed of, for example, an SRAM and used for temporarily storing various data, and a nonvolatile memory 14 formed of, for example, a CMOS backed up by a battery. The memories 12 to 14 are connected to the processor 11 by a bus 15. The nonvolatile memory 14 is loaded with an NC machining program, various parameters, a tool file in which tool data necessary for automatic programming is described, etc.

The numerical control device 10 further comprises a manual data input device 16. The data input device 16 includes a keyboard 16a having symbolic keys, a ten-key pad, etc. for allowing manual input of various commands, data, and the like, and a CRT or liquid-crystal display device having a graphic control circuit 16b built therein for generating an image signal in accordance with an image output from the processor 11 during preparation of a machining program or during simulation of a machining operation. The display device displays an image corresponding to the image signal from the graphic control circuit 16b on a display screen 16c. A plurality of soft keys 16d are provided below the display screen 16c of the display device, and are respectively assigned to different functions in different operation modes of the numerical control device in the manner that the number of functions available is greater than the number of the soft keys. The elements 16a, 16b and 16d are connected to the processor 11 by the bus 15.

Further, the numerical control device comprises axis control circuits 17, which is greater in number than the axes of the turning center 20, and servo amplifiers 18, which is equal in number to the axis control circuits. Each of the axis control circuits 17 is connected to the processor 11 through the bus 15, and controls the operation of a servomotor at the turning center 20 associated therewith through the servo amplifier 18 in accordance with the move command from the processor 11.

The PMC 30 includes a memory loaded with a sequence program, and carries out the sequence control of the turning center 20 in accordance with the sequence programme, on the basis of control output and a machine output supplied respectively from the processor 11 and the turning center 20 during operation of the turning center 20.

The operation of the numerical control device will be described in the following.

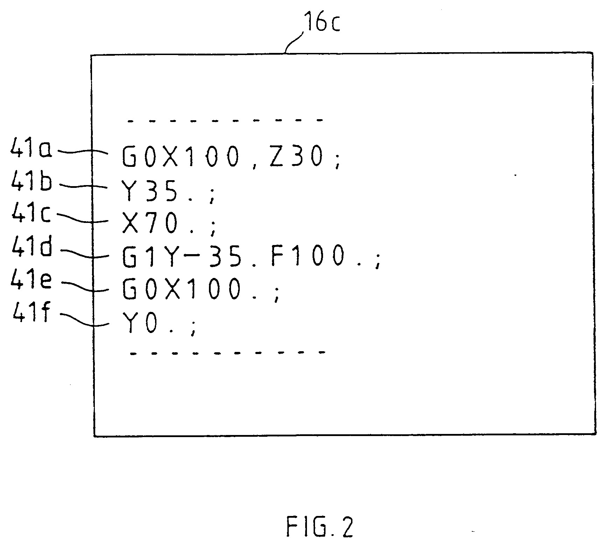

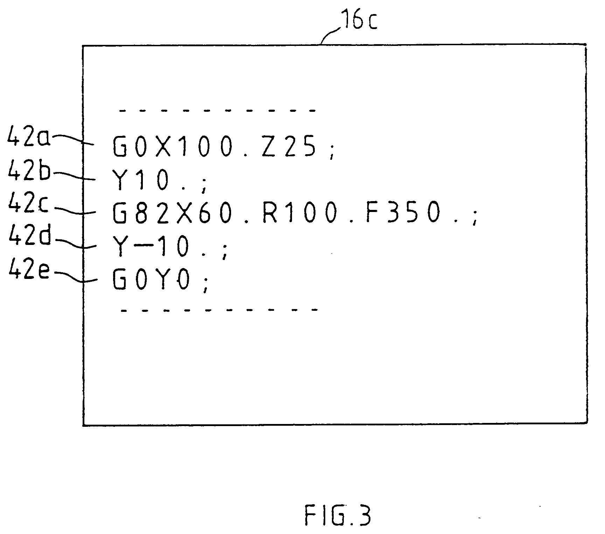

When the operator sets the numerical control device 10 to the automatic programming mode by operating the keyboard 16a, the processor 11 executes the program for automatic programming stored in the ROM 12. More specifically, the processor 11 displays various questions, when required, on the display screen 16c of the data input device 16, and automatically creates a machining program based on various inputted data, such as the shape and dimensions of the material, profile to be machined, etc., which are manually inputted by the operator in reply to the questions. As shown in FIGS. 2 and 3, the machining program being created is displayed on the display screen 16c so that the contents thereof can be checked by the operator. The created program is stored in the nonvolatile memory 14.

A machining program shown in FIG. 2 is for the groove cutting to be carried out as a post-process of a turning process, and includes the first to sixth data blocks 41a to 41f. The first to third data blocks 41a to 41c represent, respectively, a positioning command for coordinate position X100,Z30, a move command for coordinate position Y35, and a move command for coordinate position X70. The fourth block 41d represents a grooving command to cut a groove between coordinate position Y35 and coordinate position Y-35 at a feed speed of 100; the fifth block 41e represents a positioning command for coordinate position X100; and the sixth block represents a move command for coordinate position Y0.

A machining program shown in FIG. 3 is for a drilling to be carried out as a post-process of a turning process, and includes the first to fifth data blocks 42a to 42e.

The first and second blocks 42a and 42b represent a positioning command for coordinate position X00,Z25, and a move command for coordinate position Y10, respectively. The third block 42c represents a drilling command in a fixed cycle to drill a hole between coordinate position X100 and coordinate position X60 from an initial position R100 at a feed speed of 350. The fourth and fifth blocks 42d and 42e represent a move command for coordinate position Y-10 and a move command for coordinate position Y0, respectively. The drilling command in the third block 42c is a modal command, which is retained until a cancel command or another command of the same group is issued, and is executed again after the execution of the fourth block 42d.

When the creation of programs in the automatic programming mode is completed, a task menu is displayed on the display screen 16c of the data input device 16. If the operator selects the machining simulation function in a normal display mode by operating the predetermined soft key on the task menu and then selects the groove cutting program (FIG. 2) involving a tool movement relative to the Y-axis as a object of simulation, to be simulated, the processor 11 sets an XZ drawing area for a graphic animation of a side surface of the workpiece and an XY drawing area for a graphic animation of an end face of the workpiece in left and right halves of the display screen 16c respectively. Then, a message 51: "∗MACHINING SIMULATION∗", is displayed at the top of the display screen 16c, and XZ coordinate axes 52 and XY coordinate axes 53 are displayed in the XZ drawing area and XY drawing area respectively.

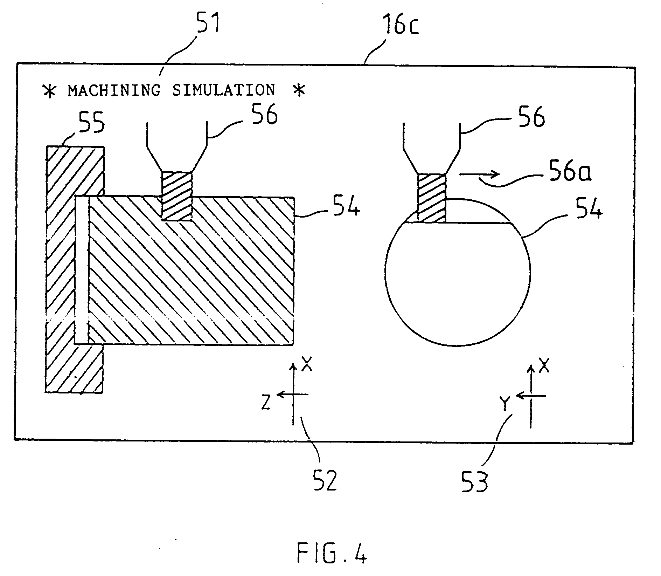

Subsequently, the processor 11 reads out the groove cutting program from the nonvolatile memory 14, one data block at a time, executes the commands included in the data block in a machine lock mode in which the turning center 20 is not actually operated, and simulates the groove cutting by graphic animation on the display screen 16c in accordance with the results of the command execution. As a result, as shown in FIG. 4, a side surface of a workpiece 54 held by a chuck 55 is graphically displayed in the XZ drawing area, and a groove cutting operation of a groove cutting tool 56 on the XZ plane is graphically displayed in an animated manner. Simultaneously, an end face of the workpiece 54 is graphically displayed in the XY drawing area, and a groove cutting operation on the XY plane, which includes a movement of the groove cutting tool 56 in the direction of arrow 56a with respect to the workpiece 54, is graphically displayed in an animated manner.

Viewing the simulated machining operation, the operator can check the correctness of the machining program. If an inconvenience such as an overshoot or undershoot of cutting or an interference between the tool and the chuck is discovered, the operator inputs a machining program edit command by operating a soft key, to set the numerical control device in an edition mode, and edits required portions of the program. A detailed description of the program edition is omitted.

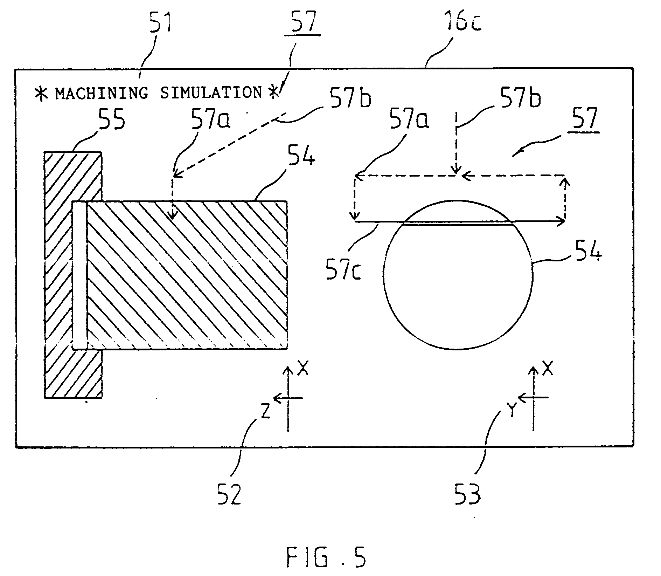

When the machining simulation function in a tool path display mode is selected on the task menu and the groove cutting program is selected as an object of simulation, the XZ drawing area and XY drawing area are set; the message 51 and coordinate axes 52 and 53 are displayed; and the groove cutting operation is simulated in the same manner as in the normal display mode. In this case, however, as shown in FIG. 5, a path 57 of the groove cutting tool 56 is graphically displayed unlike the case of the normal display mode in which the tool 56 itself is displayed. Further, the moving direction, rapid feed path, and cutting feed path of the tool are displayed respectively by arrow 57a, dashed line 57b and full line 57c. That is, in the tool path display mode, the moving conditions of the groove cutting tool, such as a rapid-feed approach to the workpiece 54 and a rapid-feed retraction from the workpiece 54 after the groove cutting, are graphically displayed.

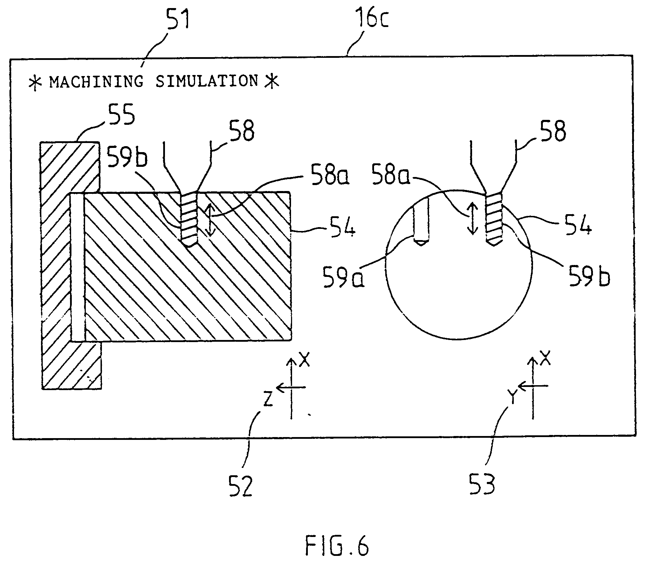

If the machining simulation function in the normal display mode is selected on the task menu and then the drilling program (FIG. 3) including a tool movement relative to the Y-axis is selected as an object of simulation, the XZ drawing area and XY drawing area are set and the message 51 and coordinate axes 52 and 53 are displayed, as in the case of selecting the groove cutting program. Further, in this case, the drilling program is executed in the machine lock mode, one block at a time, and the drilling operation is simulated by graphic animation in accordance with the results of the program execution. As a result, as shown in FIG. 6, a side surface of the workpiece 54 held by the chuck 55 is graphically displayed in the XZ drawing area, and a drilling operation of a drilling tool 58 on the XZ plane in the direction of arrow 58a with respect to the workpiece 54 is graphically displayed in an animated manner. Simultaneously, an end face of the workpiece 54 is graphically displayed in the XY drawing area, and a drilling operation of the drilling tool 58 on the XY plane in relation to the workpiece 54 is graphically displayed in an animated manner. FIG. 6 shows a simulation of drilling a hole 59b in the workpiece 54 after a drilling step for a hole 59a.

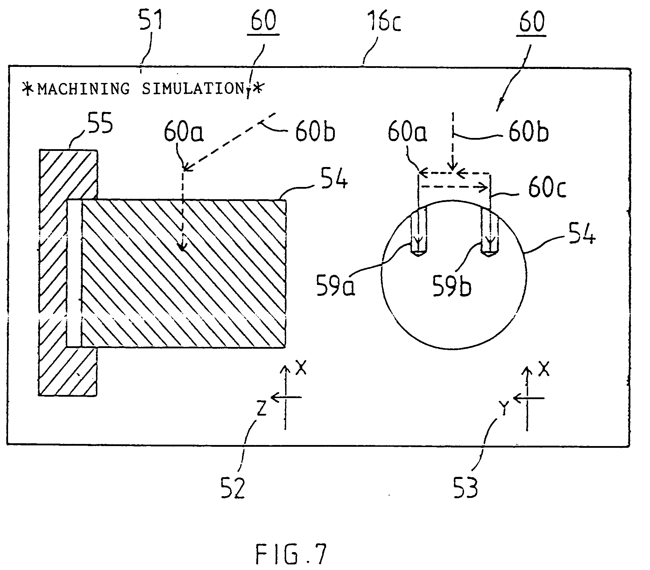

If the machining simulation function in the tool path display mode is selected on the task menu, which is followed by a selection of the drilling program as an object of simulation, the XZ drawing area and XY drawing area are set; the message 51 and coordinate axes 52 and 53 are displayed; and the drilling operation is simulated. In this case, however, as shown in FIG. 7, a path 60 of the drilling tool 58 is graphically displayed, unlike the case of the normal display mode in which the tool 58 itself is displayed. Further, the moving direction, rapid feed path, and cutting feed path of the tool are displayed respectively, by arrow 60a, dashed line 60b and full line 60c. More particularly, in the tool path display mode, the moving conditions of the drilling tool, such as a rapid-feed approach to a drilling position of the workpiece 54, a rapid-feed approach to another drilling position after the first drilling step and a rapid-feed retraction from the workpiece 54 after the drilling operation, are graphically displayed.

In the above embodiment, an interactive numerical control device is mentioned as an apparatus for carrying out the method of simulating a machining operation according to this invention, but an interactive automatic programming system or the like may be used instead.

**Claims**

1. A method of simulating a machining operation by graphic animation which is applied to a turning center having a first axis parallel to a rotary axis of a workpiece, a second axis perpendicular to the first axis, and a third axis perpendicular to both the first and second axes, comprising the steps of:
   (a) setting a predetermined drawing area relating to the third axis on a drawing screen when a machining program for a turning center operation involving a tool movement relative to the third axis of the turning center is selected as an object of simulation; and
   (b) simulating the turning center operation involving the tool movement relative to the third axis on the drawing screen and at the same time simulating the tool movement relative to the third axis in the predetermined drawing area, while executing the machining program.

2. A method according to claim 1, wherein said step (a) includes a step of setting a first drawing area relating to a side surface of the workpiece and a second drawing area relating to an end face of the workpiece and corresponding to the predetermined drawing area, on said drawing screen.

3. A method according to claim 1, wherein said step (b) includes a step of graphically displaying a path of movement of a tool with respect to said third axis.

4. A method according to claim 1, wherein said machining program is either for groove cutting or for drilling, and said step (b) correspondingly includes either a step of simulating a movement of a groove cutting tool or a drilling tool with respect to said third axis.

EP 0 509 102 A1

| 12 | 13 | 16b | 16c | 16d | 16a |
|----|----|-----|-----|-----|-----|

ROM

RAM

GRAPHIC CONTROL CIRCUIT

16

11

PROCESSOR

14

NONVOLATILE MEMORY

17

AXIS CONTROL CIRCUIT

15

20

PMC

20

TURNING CENTER

10

18

SERVO AMPLIFIER

FIG. 1

16c

```
    - - - - - - - - - - -
41a ─── G0X100,Z30;
41b ─── Y35.;
41c ─── X70.;
41d ─── G1Y-35.F100.;
41e ─── G0X100.;
41f ─── Y0.;
    - - - - - - - - - - -
```

FIG.2

16c

- - - - - - - - - - -

42a — G0X100.Z25;
42b — Y10.;
42c — G82X60.R100.F350.;
42d — Y-10.;
42e — G0Y0;

- - - - - - - - - -

FIG.3

FIG.4

51   57   16c

* MACHINING SIMULATION *

55   57a   57b   57a   57b   57

54

57c   54

X   X

Z   Y

52   53

FIG . 5

51    16c

✳ MACHINING SIMULATION ✳

55
58
59b
58a    58a    58
58
54    54
59a    59b

X
Z
52

X
Y
53

FIG.6

51  60  16c  60

*MACHINING SIMULATION*

55  60a  60b  60a  60b

54  60c

59a  59b  54

X  X

Z  Y

52  53

FIG.7

# INTERNATIONAL SEARCH REPORT

International Application No  PCT/JP91/01160

## I. CLASSIFICATION OF SUBJECT MATTER (if several classification symbols apply, indicate all) 6

According to International Patent Classification (IPC) or to both National Classification and IPC

Int. Cl$^5$  G05B19/405, B23Q15/00, B23Q17/00

## II. FIELDS SEARCHED

| Minimum Documentation Searched [7] | |
|---|---|
| Classification System | Classification Symbols |
| IPC | G05B19/405 |

| Documentation Searched other than Minimum Documentation to the Extent that such Documents are Included in the Fields Searched [8] |
|---|
| Jitsuyo Shinan Koho          1926 – 1991<br>Kokai Jitsuyo Shinan Koho    1971 – 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, A, 58-155411 (Mitsubishi Electric Corp.),<br>September 16, 1983 (16. 09. 83),<br>Line 18, upper left column to<br>line 6, upper right column, page 2<br>(Family: none) | 1-4 |
| X | JP, A, 62-222306 (Okuma Machinery Works, Ltd.),<br>September 30, 1987 (30. 09. 87),<br>Lines 7 to 13, upper left column,<br>page 3 (Family: none) | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 13, 1991 (13. 11. 91) | November 25, 1991 (25. 11. 91) |

| International Searching Authority | Signature of Authorized Officer |
|---|---|
| Japanese Patent Office | |

Form PCT/ISA/210 (second sheet) (January 1985)